Europäisches Patentamt

European Patent Office

Office européen des brevets

(11) Numéro de publication: **0 319 391**
**A1**

## (12) DEMANDE DE BREVET EUROPEEN

(21) Numéro de dépôt: 88402994.3

(22) Date de dépôt: 29.11.88

(51) Int. Cl.⁴: **B 60 G 21/04**
B 60 G 3/20

(30) Priorité: 04.12.87 FR 8716858

(43) Date de publication de la demande:
07.06.89 Bulletin 89/23

(84) Etats contractants désignés:
BE DE ES GB IT SE

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Veneau, Jean**
**21 Domaine de la Côte Noire**
**F-92500 Rueil Malmaison (FR)**

**Pierre, Jacques**
**35 Rue du Professeur Pauchet**
**F-92420 Vaucresson (FR)**

(54) Suspension pour véhicules automobiles.

(57) Suspension pour véhicule automobile du type comportant une triangulation inférieure (1-1') et une bielle supérieure (2-2'), reliées au porte-fusée (3-3'). Chaque demi-train n'est fixé à la caisse que par un seul axe de liaison (6).

FIG.1

**Description**

## SUSPENSION POUR VEHICULE AUTOMOBILE

La présente invention se rapporte à une suspension pour véhicule automobile, plus particulièrement décrite pour un train arrière, mais facilement transposable à un train avant, du type comportant un triangle inférieur et une biellette supérieure.

Un premier avantage découlant de la géométrie de la suspension selon l'invention réside dans le fait qu'elle induit un effet de carrossage favorable en situation de dévers, c'est-à-dire qu'elle crée au niveau du contact de la roue au sol et en situation de virage une force transversale qui s'oppose en partie ou en totalité à la force centrifuge à laquelle est soumis le pneu.

Un second avantage provient du fait que, malgré la possibilité ci-dessus, en situation de pompage symétrique (c'est-à-dire lorsque les deux roues sont soumises à un même mouvement ascendant provenant du passage d'un obstacle), le parallélisme des roues demeure constant et ne présente aucune variation de carrossage indésirée.

Un autre avantage de l'invention découle de la localisation du centre de roulis qui est haut placé et permet, de ce fait, une diminution, voire une disparition du dispositif antiroulis.

Un autre avantage de la suspension provient du fait qu'elle ne comporte qu'une attache à la caisse pour chaque côté de train de roue, au niveau de son triangle inférieur à l'exclusion de toute liaison analogue de la biellette supérieure, ce qui permet d'éliminer le renfort correspondant de la caisse. Ceci se trouve être source d'allègement et de simplification, s'ajoutant aux améliorations de tenue de route découlant des points précédents.

L'invention sera maintenant décrite, à titre d'exemple non limitatif, au regard des figures 1 à 4 ci-jointes qui se rapportent respectivement :

- la figure 1 à une vue schématique de derrière de la suspension selon l'invention,

- la figure 2 à une vue en perspective d'une réalisation du triangle inférieur de guidage,

- la figure 3 à une vue de face d'un élément du train,

- la figure 4 a une vue schématique de derrière, montrant le train en situation de dévers.

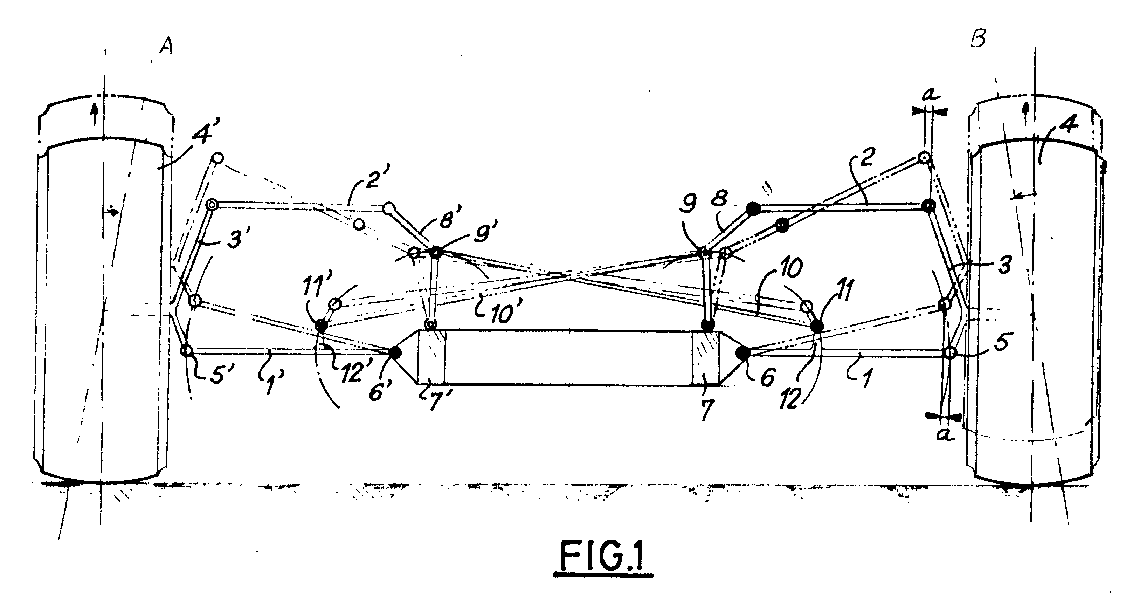

En référence à la figure 1, on voit que le train de l'invention est du type comportant un triangle inférieur 1 et une biellette supérieure 2 articulés sur le porte-fusée 3, portant également la roue 4.

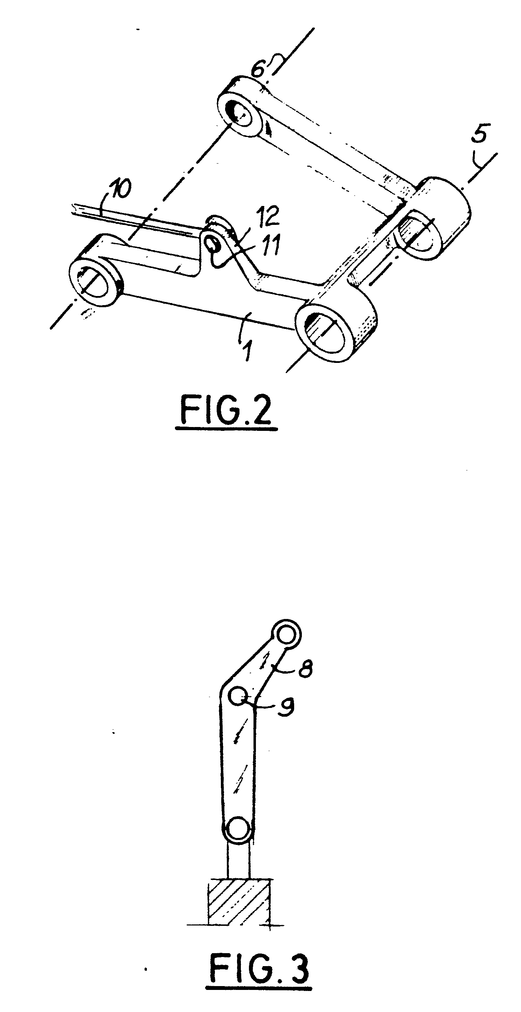

On voit en détail, à la figure 2, la forme du triangle inférieur 1 et ses axes d'articulation 5 et 6, respectivement au porte-fusée 3 et au longeron 7 du véhicule. Sur ce dernier, est également articulé une pièce courbe ou basculeur 8, vu en détail à la figure 3 dont la partie haute sert d'articulation à la biellette supérieure 2 dont l'extrémité opposée prend appui sur le porte-fusée 3.

La pièce courbe 8 ou basculeur permet l'articulation en 9 d'une barre 10 dont l'extrémité libre s'articule au sommet 11' d'une protubérance 12' solidaire du triangle inférieur 1', constituant l'homologue du triangle 1 pour la partie gauche de la suspension. Cette dernière comporte, par ailleurs, les mêmes constituants 2', 3', 8', 10', etc. que la partie droite.

Considérons l'évolution de la géométrie du train selon l'invention en pompage symétrique, donc lorsque les deux roues 4-4' s'élèvent d'une quantité égale au passage d'un obstacle.

Lors du mouvement ascendant de la roue 4, le triangle inférieur 1 et sa protubérance 12 décrivent un arc centré sur l'axe 6. Ce faisant, la barre de liaison 10' est poussée vers la gauche et déplace le basculeur 8' d'un angle α. Celui-ci, articulé sur le longeron 7' et à la biellette 11', transmet à cette dernière une poussée vers la gauche, déplaçant son point d'articulation au porte-fusée 3' d'une distance (a).

La roue gauche 4', par le passage de l'obstacle, élève le triangle inférieur 1' d'une quantité correspondante ; du fait de son articulation au longeron 7', il décrit un arc au cours duquel son point d'articulation avec le porte-fusée 3' se déplace vers la gauche.

Le calcul du train selon l'invention permet de rendre le déplacement ci-dessus égal à (a) évoqué plus haut, si bien que, lors de son ascension, la roue 4' demeure parallèle à son plan d'origine.

Pour des raisons de symétrie, il en est de même pour la roue droite 4, ce qui donne un résultat favorable au niveau de la tenue de route du véhicule.

Il est clair que, sans le système compensateur de l'invention, l'arc décrit par les triangles inférieurs 1-1' entraînerait une variation du carrossage dans le sens des traces pointillées A-B défavorable à la tenue de route.

Notons encore qu'un autre facteur favorable découlant de la géométrie du train selon l'invention résulte du fait que, dans la situation de pompage ci-dessus, le centre de roulis est au sol, ce qui n'est pas le cas d'une suspension antérieure dépourvue du système compensateur.

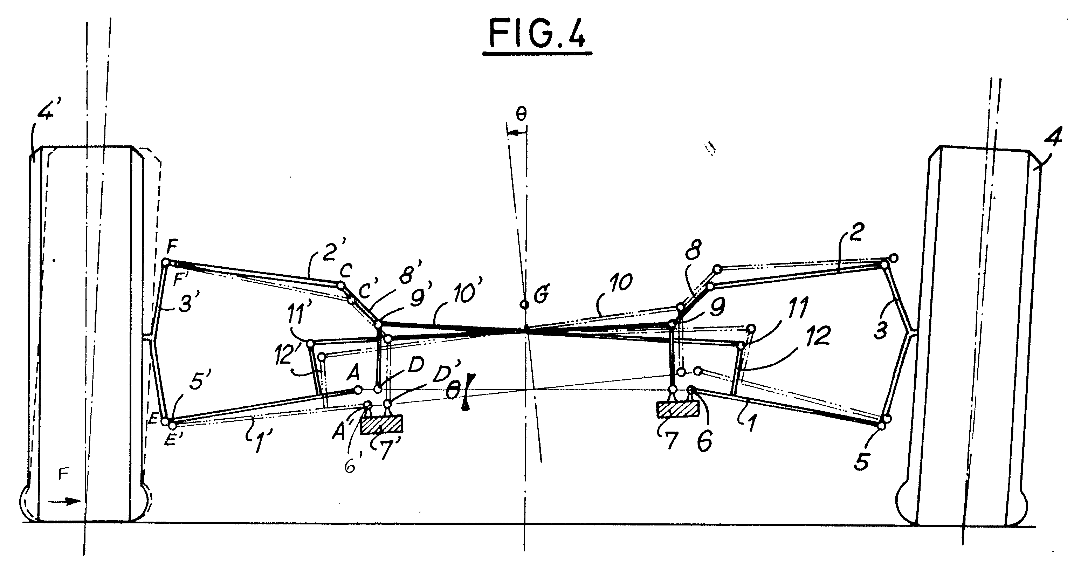

La figure 4 représente le changement de géométrie du train selon l'invention en situation de dévers, tel que cela est le cas lors de la prise d'un virage à droite. Dans ces conditions, la caisse s'incline du côté gauche d'un angle θ, ce qui entraîne l'articulation du triangle inférieur gauche à la caisse de la position de A en A', celle du basculeur de D en D', qui à son tour déplace son articulation à la biellette supérieure 2' de C en C', entraînant de ce fait la liaison au porte-fusée de F en F'.

Simultanément, l'articulation 5' du triangle 1' au porte-fusée 3' passe de E en E'.

De ce qui précède, on constate le passage de la roue 4' de sa position en traits pleins à celle en traits interrompus, présentant bien un angle de carrossage recherché.

En ce qui concerne le demi-train droit, l'inclinaison du châssis 20 sur la gauche provoque une élévation de cette partie de la suspension qui prend donc la position indiquée en traits interrompus. Les points A, D, C, F, E passent respectivement en A'', D'', C'',

F″, E″. Comme pour le demi-train gauche, la déformation ci-dessus de la suspension entraîne une inclinaison recherchée de la roue 4 d'un angle α ′ sensiblement égal à α -.

La nouvelle géométrie du train décrite ci-dessus crée, à la jonction du pneu au sol, une force F dirigée vers l'intérieur de la courbe, qui s'oppose à la force centrifuge, de sens contraire, résultant de la prise du virage à droite.

Notons encore que, selon l'invention, le centre de roulis du véhicule se trouve placé haut, à proximité de son centre de gravité. L'avantage de cette disposition réside dans le fait que celui-ci se penche moins dans les virages et, qu'à la limite, on peut envisager la suppression de la barre antiroulis, ou de toute façon d'en diminuer fortement le diamètre.

**Revendications**

Suspension pour véhicule automobile, du type comportant pour chaque roue, une triangulation inférieure (1-1′) articulée sur la partie inférieure du porte-fusée (3-3′) par un axe (5-5′) et sur le chassis du véhicule (7-7′) par un axe (6-6′) et possèdant un bossage (12-12′) situé entre l'axe (6-6′) et l'axe (5-5′), une bielle (2-2′) articulée d'une part à la partie supérieure du porte-fusée (3-3′) et d'autre part à la partie haute d'un basculeur (8-8′), caractérisé en ce que ledit basculeur (8-8′) qui est articulé à sa partie basse en (D) sur le chassis (7-7′) est actionné dans sa partie médiane en (9-9′) par une barre (10-10′) qui prend appui sur l'articulation (11-11′) du bossage (12-12′) du triangle inférieur (1-1′) lui étant symétriquement opposé par rapport à l'axe longitudinal de la voiture.

FIG.1

FIG.2

FIG.3

# FIG.4

EP 0 319 391 A1

Office européen
des brevets

# RAPPORT DE RECHERCHE EUROPEENNE

Numero de la demande

EP 88 40 2994

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | FR-A-2 616 715 (PEUGEOT)<br>* Page 2, ligne 4 - page 3, ligne 8; page 4, ligne 27 - page 6, ligne 33; figures 2-5 *<br>--- | 1 | B 60 G 21/04<br>B 60 G 3/20 |
| A | FR-A- 806 515 (M.G. CAR)<br>* Page 2, ligne 92 - page 3, ligne 42; page 5, lignes 39-46; figures 1,3 *<br>--- | 1 | |
| A | GB-A-1 300 028 (PARSONS)<br>* Page 3, lignes 17-56,73-94,98-114; page 4, lignes 7-32; figures 2-4 *<br>--- | 1 | |
| A | US-A-4 373 743 (PARSONS)<br>* Figures 1-4 *<br>--- | 1 | |
| A | DE-A-2 855 105 (SCHWARZ)<br>* Page 1, revendications 1-3; figures 1-5 *<br>--- | 1 | |
| A | US-A-4 159 128 (BLAINE)<br>--- | | |
| A | CH-A- 537 818 (JEANDUPEUX)<br>--- | | **DOMAINES TECHNIQUES RECHERCHES (Int. Cl.4)** |
| A | US-A-2 978 255 (ROSENKRANDS)<br>--- | | B 60 G |
| A | FR-A-2 040 840 (ALPINES)<br>----- | | |

Le présent rapport a été établi pour toutes les revendications

| Lieu de la recherche | Date d'achèvement de la recherche | Examinateur |
|---|---|---|
| LA HAYE | 01-03-1989 | ESPEEL R.P. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
............................................................
& : membre de la même famille, document correspondant